(19) **Europäisches Patentamt**
**European Patent Office**
**Office européen des brevets**

(11) **EP 1 468 507 B1**

(12) **EUROPÄISCHE PATENTSCHRIFT**

(45) Veröffentlichungstag und Bekanntmachung des Hinweises auf die Patenterteilung:
**09.04.2008 Patentblatt 2008/15**

(21) Anmeldenummer: **03709595.7**

(22) Anmeldetag: **22.01.2003**

(51) Int Cl.:
***H04B 7/06*** (2006.01)

(86) Internationale Anmeldenummer:
**PCT/DE2003/000193**

(87) Internationale Veröffentlichungsnummer:
**WO 2003/063386 (31.07.2003 Gazette 2003/31)**

(54) **VERFAHREN ZUR LEISTUNGSOPTIMIERTEN STRAHLFORMUNG EINES EINER BASISSTATION ZUGEHÖRIGEN ANTENNENARRAYS FÜR ZELLULARE MOBILFUNKSYSTEME IM DOWNLINK-KANAL**

METHOD FOR THE PERFORMANCE-OPTIMIZED FORMATION OF THE BEAM OF AN ANTENNA ARRAY BELONGING TO A BASE STATION FOR CELLULAR MOBILE RADIO SYSTEMS IN THE DOWNLINK CHANNEL

PROCEDE DE MISE EN FORME A PUISSANCE OPTIMISEE DU FAISCEAU D'UN RESEAU D'ANTENNES ASSOCIE A UNE STATION DE BASE DESTINE A DES SYSTEMES DE COMMUNICATION RADIO MOBILES CELLULAIRES DANS LE CANAL DE LIAISON DESCENDANTE

(84) Benannte Vertragsstaaten:
**AT BE BG CH CY CZ DE DK EE ES FI FR GB GR HU IE IT LI LU MC NL PT SE SI SK TR**

(30) Priorität: **23.01.2002 DE 10203593**

(43) Veröffentlichungstag der Anmeldung:
**20.10.2004 Patentblatt 2004/43**

(73) Patentinhaber: **Nokia Siemens Networks GmbH & Co. KG**
**81541 München (DE)**

(72) Erfinder:
• **BOCHE, Holger**
**10318 Berlin (DE)**
• **SCHUBERT, Martin**
**10585 Berlin (DE)**

(56) Entgegenhaltungen:
**EP-A- 0 999 658**

• **FARSAKH C ET AL: "SPATIAL COVARIANCE BASED DOWNLINK BEAMFORMING IN AN SDMA MOBILE RADIO SYSTEM" IEEE TRANSACTIONS ON COMMUNICATIONS, IEEE INC. NEW YORK, US, Bd. 46, Nr. 11, 1. November 1998 (1998-11-01), Seiten 1497-1506, XP000786986 ISSN: 0090-6778**

• **VISOTSKY E ET AL: "Optimum beamforming using transmit antenna arrays" VEHICULAR TECHNOLOGY CONFERENCE, 1999 IEEE 49TH HOUSTON, TX, USA 16-20 MAY 1999, PISCATAWAY, NJ, USA,IEEE, US, 16. Mai 1999 (1999-05-16), Seiten 851-856, XP010341888 ISBN: 0-7803-5565-2**

• **STRIDH R ET AL: "SYSTEM EVALUATION OF OPTIMAL DOWNLINK BEAMFORMING IN WIRELESS COMMUNICATION" VTC FALL 2001. IEEE 54TH. VEHICULAR TECHNOLOGY CONFERENCE. PROCEEDINGS. ATLANTIC CITY, NJ, OCT. 7 - 11, 2001, IEEE VEHICULAR TECHNOLGY CONFERENCE, NEW YORK, NY: IEEE, US, Bd. 1 OF 4. CONF. 54, 7. Oktober 2001 (2001-10-07), Seiten 343-347, XP001113807 ISBN: 0-7803-7005-8**

• **SCHUBERT M.; BOCHE H.: "An efficient algorithm for optimum joint downlink beamforming and power control" VEHICULAR TECHNOLOGY CONFERENCE, VTC SPRING 2002, Bd. 4, 6. - 9. Mai 2002, Seiten 1911-1915, XP002250480**

## Beschreibung

Die Erfindung betrifft ein Verfahren zur leistungsoptimierten Strahlformung eines einer Basisstation zugehörigen Antennenarrays für zellulare Mobilfunksysteme mit unabhängigen Nutzern, die gleichzeitig mit der Basisstation im selben Frequenzband/Zeitschlitz kommunizieren, im Downlink-Kanal.

In zellularen Mobilfunksystemen erfolgt die Kommunikation zwischen den Mobilstationen über Basisstationen. Dabei kommuniziert eine Basisstation mit mehreren Mobilstationen, welche sich innerhalb eines begrenzten Gebietes (Zelle) aufhalten. Man unterscheidet zwischen Uplink (Aufwärtsverbindung, d.h. Verbindung von der Mobilstation zur Basisstation) und Downlink (Abwärtsverbindung, d.h. Verbindung von der Basisstation zur Mobilstation). Zukünftige Übertragungssysteme sind durch einen stark asymmetrischen Datenverkehr charakterisiert. Aufgrund einer großen Nachfrage an Internet-Informationsdiensten hat der Downlink eine wesentlich größere Datenmenge zu bewältigen als der Uplink. Dies erfordert eine intelligente Verwaltung der Ressourcen sowie Übertragungsverfahren, welche die zur Verfügung stehende Bandbreite effizient ausnutzen. An der Mobilstation sind die Möglichkeiten für eine aufwendige Signalverarbeitung jedoch begrenzt. Der Grund hierfür ist zum einen die begrenzte Größe des Endgeräts, zum anderen der hohe Energieverbrauch. Eine Kapazitätssteigerung im Downlink wird durch den Einsatz von Antennenarrays (Gruppenantennen) an der Basisstation erreicht, die ein elektronisch steuerbares und richtungsabhängiges Übertragungsverhalten aufweisen. Dieses Verfahren wird als Strahlformung (Beamforming) bezeichnet und ist beispielsweise in Proc. IEEE, vol. 85, no. 7, pp. 1029-1060, 1997 und Proc. IEEE, vol. 85, no. 8, pp. 1193-1245, 1997 beschrieben.

Kommuniziert eine Basisstation gleichzeitig mit K unabhängigen Nutzern, die auf der gleichen Ressource senden (gleicher Zeitschlitz, gleiche Frequenz), so ist die Kapazität eines jeden Nutzers durch das Nebensprechen der anderen Nutzer begrenzt. Die Downlink-Strahlformung ermöglicht nun durch gerichtetes Abstrahlverhalten eine räumliche Separierung der K Nutzer (z.B. Mobilstationen). Ein Maß für die Verbindungsgüte ist der Signal-zu-Interferenz-plus-Rauschabstand (Signal-to-Interference-plus-Noise-Ratio - SINR) an jeder Mobilstation. Unterschiedliche Dienste erfordern unterschiedliche SINR zur Realisierung einer vorgegebenen Datenrate (charakterisiert durch die Betriebsgüte; Quality-of-Service - QoS). Für das SINR des i-ten Nutzers muss gelten

$$SINR_i \geq \gamma_i, \quad 1 \leq i \leq K \;,$$

wobei $\gamma_i$ die Mindestanforderung des Signal-zu-Interferenz-plus-Rauschabstands (minimum protection ratio) beschreibt.

In Proc. ITG-Diskussionssitzung "Antennen für mobile Systeme 2001", Ilmenau, Germany, März '01, pp.113-122 wird ein Verfahren zur Leistungsanpassung der Nutzer angegeben, bei dem für gegebene Beamforming-Vektoren eine Leistungskontrolle durchgeführt wird; eine leistungsoptimierte Strahlformung ist mit diesem Verfahren nicht möglich.

In EP 0 899 813 ist ein Verfahren zur Bestimmung einer Richtcharakteristik einer Funkstation beschrieben. Hierbei wird zunächst ein verbindungsspezifischer Gewichtseinheitsvektor (Beamformingvektor) bestimmt, für den anschließend eine bewertende verbindungsspezifische Leistung für die Verbindung ermittelt wird, wobei die Bestimmung der verbindungsspezifischen Sendeleistungen durch Lösung eines linearen Gleichungssystems durchgeführt wird. Die beschriebene Lösung beinhaltet zwar Verfahrensschritte für eine Leistungsreduktion, es wird aber keine Lösung für eine leistungsoptimierte Strahlformung angegeben, die sowohl eine gleichzeitige Optimierung der Beamforming-Vektoren und der Sendeleistung realisiert, sodass die gesamte Leistung minimiert wird bei gleichzeitiger Einhaltung von gegebenen SINR-Anforderungen. Die angegebene Lösung basiert auf einer Nachoptimierung. Erhalten wird eine suboptimale unabhängige Lösung. Falls die SINR-Anforderungen bereits in dieser unabhängigen Lösung nicht erfüllt werden können, scheitert auch die vorgeschlagene Nachoptimierung. Eine optimale Ressourcenverwaltung ist mit diesem Verfahren nicht möglich.

In IEEE Journal on Selected Areas in Communications, Vol. 16, No. 8, October 1998, pp. 1437-1449 ist ein Verfahren zur gemeinsamen Leistungskontrolle und Strahlformung im Downlink vorgeschlagen. Dieses Verfahren ist jedoch aufwendig in Bezug auf das Konvergenzverhalten der Lösungen bezüglich der gewünschten Gesamtsendeleistung in Abhängigkeit von den SINR-Anforderungen. Das Konvergenzverhalten verschlechtert sich drastisch, wenn die SINR-Anforderungen sich ihrer oberen Grenze nähern.

Den selben Nachteil weist eine Veröffentlichung in "Technical Research Report" des Center for Satellite and Hybrid Communication Networks Nummer CSHCN TR 97-33 aus dem Jahre 1997 mit dem Titel "Joint Optimal Power Control and Beamforming in Wireless Networks Using Antenna Arrays" auf, in der eine Lösung für die gemeinsame Berechnung der Übertragungsleistungen und der Beamforming-Gewichtsvektoren bei minimaler Übertragungsleistung beschrieben ist. Hierzu wird zunächst bei einer festen Leistungszuteilung für jede Mobilstation das jeweilige SINR mittels MVDR ( Minimum Variance Distortionless Response) -Strahlformer maximiert. Ausgehend von diesem fixierten Beamforming Pattern werden die Leistungen der Mobilstationen angepasst, um die Gesamtsendeleistung zu minimieren. Diese beiden Schritte werden iterativ wiederholt bis sowohl der Vektor der Übertragungsleistungen als auch die Gewichtskoeffizienten des Strahlformers zu einem gemeinsamen optimalen Wert konvergieren. Für dieses Konvergenzverhalten ist jedoch eine hohe Rechenintensität erforderlich.

Eine in Proc. of 37th Annual Allerton Conference, pp. 987-996, Sept. 1999 beschriebene Lösung bettet das ursprüngliche Optimierungsproblem in eine semidefinite Optimierungsaufgabe ein. Hierzu wird eine Kostenfunktion mit einer Anzahl von $M/(M-1)/2$ Unbekannten pro Nutzer aufgestellt, wobei M die Anzahl der Antennenelemente ist. Dies erklärt den wesentlich höheren numerischen Aufwand gegenüber der ursprünglichen Problemstellung mit lediglich M Unbekannten pro Nutzer.

Aufgabe der Erfindung ist es deshalb, ein im Vergleich zum Stand der Technik weniger aufwendiges Verfahren zur leistungsoptimierten Strahlformung anzugeben, das eine Minimierung der abgestrahlten Sendeleistung bei gleichzeitiger Einhaltung von individuellen SINR-Anforderungen an den Mobilstationen gewährleistet und gleichzeitig eine effiziente dynamische Ressourcenverwaltung einbezieht. Eine gegebene Gesamtsendeleistung soll nicht überschritten werden, und das Verfahren soll ein schnelles Konvergenzverhalten zeigen.

Farsakh, C. et al. "Spatial covariance based downlink beamforming in an SDMA mobile radio system", IEEE Transactions on Communications, IEEE Inc. New York, US, Band 46, Nr. 11, November 1998, Seiten 1497 bis 1506 offenbart, dass an dem Downlink eines SDMA Mobilradiosystems unterschiedliche Benutzer, welche sich gleiches Frequenzband und gleichen Timeslot teilen, mittels Beamformens räumlich getrennt werden müssen. Farsakh, C. et al. analysiert einen Ansatz zum gemeinsamen Berechnen von Gewichten auf solche Weise, dass alle Benutzer ihr Signal mit einem gegebenen Signal-zu-Rausch-und-Interferenz-Verhältnis erhalten. Die Berechnungen basieren auf räumlichen Kovarianzmatrizen, welche die benutzerspezifischen Kanäle gemittelt über das Fast Fading beschreiben. Die offenbarten Algorithmen sollen die Array-Obermittlungsenergie minimieren, während sie die Benutzer räumlich trennen, unabhängig von Rang der räumlichen Kovarianzmatrizen. Da dies das Lösen eines komplexen nichtlinearen beschränkten Optimierungsproblems erfordert, werden einige Näherungen des Algorithmus dargestellt und verglichen, auf der Basis von Arrayenergie, Komplexität und Konvergenz.

Die Aufgabe wird erfindungsgemäß durch ein Verfahren zur leistungsoptimierten Strahlformung eines einer Basisstation zugehörigen Antennenarrays für zellulare Mobilfunksysteme mit unabhängigen Nutzern im Downlink-Kanal, die gleichzeitig mit der Basisstation im selben Frequenzband/Zeitschlitz kommunizieren, gelöst, bei dem

- in einer ersten Stufe zur Optimierung der SINR-Balance zunächst für eine gegebene maximale Sendeleistung $\rho_{max}$ der Basisstation eine Untermenge von K Nutzern bestimmt wird, für die Lösungen $SINR_i \geq \gamma_i$, $1 \leq i \leq K$ existieren, wobei $\gamma_i$ die Mindestverbindungsgüte bedeutet, und für die das ausbalancierte Maximum des Verhältnisses $SINR_i / \gamma_i = C_{max}^{opt}$, $1 \leq i \leq K$ unter allen in Frage kommenden Nutzerkombinationen möglichst groß ist, indem

- zuerst eine Kanalschätzung für alle in Frage kommenden Nutzer durchgeführt wird, wobei jedem Nutzer definierte Kanaleigenschaften durch die räumliche Kovarianzmatrix $R_1,..., R_K$ zugeordnet werden,

- K Nutzer ausgewählt werden, denen jeweils eine definierte Mindestverbindungsgüte $\gamma_1, ..., \gamma_K$ zugeordnet wird (dynamic channel allocation)

- danach eine Initialisierung erfolgt, bei der die verbindungsspezifische Beamforming-Matrix $U^{(n)}$ berechnet wird,

- anschließend für diese Beamforming-Matrix $U^{(n)} = [u_1^{(n)}, ..., u_K^{(n)}]$ ein Leistungsvektor $p^{(n)}$ ermittelt wird, sodass die abgestrahlte Gesamtleistung $\rho_{max}$ ist und die resultierenden $SINR_i(U^{(n)},p^{(n)}) /\gamma_i$ auf einem maximalen Niveau $C_{max}(n)$ ausbalanciert sind,

- danach eine optimierte Beamforming-Matrix $U^{(n+1)} = [u_1^{(n+1)}, ..., u_K^{(n+1)}]$ für den zugehörigen Wert $C_{max}(n + 1)$, wobei $C_{max}(n + 1) \geq C_{max}(n)$ ist, ermittelt wird und

- letztendlich die beiden letzten Schritte so oft wiederholt werden, bis entweder Konvergenz mit $C_{max}(n) - C_{max}(n-1) < \varepsilon$ festgestellt wird oder $C_{max}^{opt}(n) \geq 1$ erfüllt ist, und

- bei $C_{max}^{opt} < 1$ eine neue Nutzerkombination auf der Basis der bereits durchgeführten Kanalschätzung ausgewählt und die vorerwähnten Verfahrensschritte wiederholt werden bis $C_{max}^{opt} \geq 1$ erfüllt ist und

• in einer zweiten Stufe des Verfahrens eine Minimierung der Gesamtsendeleistung der Basisstation durchgeführt wird, wozu

- zunächst für die aus der Optimierung der ersten Stufe gegebenen Werte $U^{(n)}$, für die gilt $SINR_i(U^{(n)}, p_{max}^{(n)})/\gamma_i \geq 1$, 1, der leistungsminimierende Vektor $p_{min}(n)$ und die gesamte minimale Übertragungssendeleistung $\rho_{min}(n)$ bestimmt und

- dann für diese minimale Übertragungssendeleistung $\rho_{min}(n)$ die zugehörige Beamforming-Matrix $U^{(n + 1)} =$

**[u₁^(n+1), ..., u_K^(n+1)]** $[u_1^{(n+1)}, ..., u_K^{(n+1)}]$ ermittelt wird und

- die für die Optimierung der Gesamtsendeleistung $\rho_{min}$ genannten Schritte so oft wiederholt werden bis $\rho_{min}(n-1) - \rho_{min}(n) < \varepsilon$ ist.

In einer Ausführungsform der Erfindung wird die Berechnung/Ermittlung des maximalen Wertes für $C_{max}(n)$ durch Lösung des Eigenproblems der Matrix $\Lambda(\boldsymbol{U^{(n)}}, \rho_{max})$ durchgeführt.

Eine andere Ausführungsform sieht vor, die Beamforming-Vektoren $\boldsymbol{u^{(n+1)}}$ als dominante verallgemeinerte Eigenvektoren der Matrixpaare $(\boldsymbol{R_i}, \boldsymbol{Q_i}(\mathbf{q^{(n)}}))$ mit $1 \leq i \leq K$ zu ermitteln.

Das erfindungsgemäße Verfahren gibt eine Lösung für eine leistungsoptimierte Strahlformung für mehrere/alle Nutzer an, d.h. die Lösung ermöglicht eine ausbalancierte Verteilung an Ressourcen für alle Nutzer. Bereits im Laufe der ersten Stufe des erfindungsgemäßen Verfahrens, das in zwei Stufen abläuft, ist eine Entscheidung möglich, ob die SINR-Werte eingehalten werden können, d.h. das Szenario unterstützt werden kann, oder nicht. In der ersten Stufe wird mit der Optimierung der SINR-Balance festgestellt, ob die Lösung durchführbar ist. Ist dies nicht der Fall, werden - im Zusammenspiel mit dem Ressourcenmanagement Systemparameter gelockert, beispielsweise durch Verringerung der Anzahl der Nutzer bzw. deren Umverteilung in ein anderes Band - korrigierte Ausgangsdaten zur Verfügung gestellt, mit denen die Prozedur wiederholt wird bis das Verhältnis des Signal-zu-Interferenz-plus-Rauschabstandes (Signal-to-Interference-plus-Noise-Ratio - SINR) zur Mindestanforderung des Signal-zu-Interferenz-plus-Rauschabstands (minimum protection ratio) an jeder Mobilstation $SINR_i / \gamma_i \geq 1$ ist, mit $1 \leq i \leq K$. Die erste Stufe liefert also mit dem Leistungsvektor $p^{(n)}$ und der Beamforming-Matrix $U^{(n)}$ die notwendige Größen, welche $SINR_i / \gamma_i$ maximieren. Erst wenn $SINR_i / \gamma_i$ ausreichend ist, erfolgt in der zweiten Stufe des erfindungsgemäßen Verfahrens die Minimierung der Sendeleistung und daraus wiederum iterativ die Ermittlung der konkreten zugehörigen Beamforming-Vektoren für diese (minimierte) Sendeleistung.

Die erfindungsgemäße Lösung ermöglicht damit die Ausprägung einer Richtcharakteristik für jeden Nutzer, welche die abgestrahlte Energie in Richtung des gewünschten Nutzers oder in Richtung der Mehrwegekomponenten konzentriert unter Einhaltung ganz spezifischer Übertragungsbedingungen. Die so erzielten Gewinne lassen sich sowohl zur Steigerung der Kapazität als auch zur Verringerung der abgestrahlten Leistung und zur Reduktion der benötigten Bandbreite nutzen, d.h. eine Verbesserung der spektralen Effizienz wird erreicht. Eine Steigerung der Kapazität über ein gefordertes Maß hinaus ist allerdings nicht sinnvoll, vielmehr werden die bestehenden Freiheitsgrade in der erfindungsgemäßen Lösung zur Reduktion der abgestrahlten Leistung genutzt, was sich positiv auf die Interferenz in Nachbarzellen auswirkt und den Energieverbrauch und "Elektro-Smog" reduziert.

Die Erfindung wird in folgenden Ausführungsbeispielen anhand von Zeichnungen näher erläutert.

Dabei zeigen:

Fig. 1    eine Kurve, die das monotone Wachsen von $C(\boldsymbol{U^{(n)}}, \rho)$ mit größer werdendem $\rho$ zeigt;

Fig. 2    Kurven, die das Konvergenzverhalten von $C_{max}(n)$ zum optimalen Wert $\boldsymbol{C_{max}^{opt}}$ in verschiedenen Iterationsschritten zeigen;

Fig. 3    Kurven, die den Iterationsprozess für die Ermittlung der Beamforming-Vektoren $\boldsymbol{U^{(n)}}$ bei entsprechenden Leistungsminimierung von $\rho_{min}(n)$ zeigen;

Fig. 4    schematische Darstellung einer Mobilfunkzelle mit linearem Antennenarray;

Fig. 5    schematische Darstellung einer Mobilfunkzelle mit kreisförmigem Antennenarray;

Fig. 6    das Konvergenzverhalten einer in Fig. 4 dargestellten Mobilfunkzelle;

Fig. 7    das Konvergenzverhalten einer in Fig. 5 dargestellten Mobilfunkzelle;

Fig. 8    das Konvergenzverhalten der erfindungsgemäßen Lösung im Vergleich zu einer bekannten Lösung.

Betrachtet wird folgendes Downlink-Szenario: Eine Basisstation kommuniziert gleichzeitig mit K unabhängigen Nutzern, die auf der gleichen Ressource senden (gleicher Zeitschlitz, gleiche Frequenz). Angenommen, Q lokale Streupunkte befinden sich um die i-te Mobilstation, dann lassen sich die M Kanäle zwischen den einzelnen Array-Elementen und dem i-ten Nutzer durch folgenden Vektor beschreiben

$$\mathbf{h_i}(t) = \sum_{q=1}^{Q} \beta_{iq}(t) \mathbf{a}\left(\theta_{iq}\right) \tag{1}$$

wobei der Pfadkoeffizient $\beta_{iq}(t)$ die zufälligen komplexen Pfaddämpfungen enthält, welche sich aus der Überlagerung der lokalen Streuer in der Umgebung der i-ten Mobilstation an den Arrayelementen ergeben. Der Vektor $\boldsymbol{a}(\theta_{iq})$ enthält

die Phasenverschiebungen, die sich an den einzelnen Antennenelementen ergeben, wenn eine Wellenfront mit Einfallswinkel $\theta_{iq}$ abgetastet wird. Der Kanal wird als nicht-frequenzselektiv angenommen. Die Ergebnisse der im Weiteren dargestellten Lösung können auch für frequenzselektive Kanäle genutzt werden, beispielsweise wenn diese mit einem RAKE-Empfänger kombiniert wird. Eine statistische Charakterisierung des Kanals des i-ten Nutzers erhält man durch die räumliche Kovarianzmatrix

$$\mathbf{R}_i = \mathcal{E}\left\{\mathbf{h}_i\mathbf{h}_i^H\right\} \qquad 1 \leq i \leq K \qquad (2)$$

wobei $\varepsilon$ der zeitliche Mittelwert über ein bestimmtes Beobachtungsfenster ist Wenn Rang $(\mathbf{R}_i)$ = 1, dann ist der Kanal unveränderlich und mit $\mathbf{R}_i$ liegt ideale räumliche Kanalinformation vor. Weiterhin wird von einem Modell ausgegangen, bei dem jeder eingehende Datenstrom multipliziert wird mit dem Faktor $\sqrt{P_i}$ und gewichtet wird mit dem konjugiert komplexen Beamforming-Vektor $u_i$*. Ohne Verlust der allgemeinen Gültigkeit wird die Bedingung festgelegt

$$\mathbf{u}_i^H \mathbf{u}_i = 1 \qquad (3)$$

was auch im Weiteren so angenommen wird. $P_i$ ist die Nutzleistung, die an die i-te Mobilstation gesendet wird. Für die Beamforming-Matrix wird im Folgenden $U= [u_1, ..., u_K]$ und für den Leistungsvektor $\rho = [P_1, ..., P_K]^T$ verwendet. Dem Stand der Technik nach ist bekannt (s. IEEE Trans. on Information Theory, vol. 42, no. 5, pp. 1520-1529, Sept. 1996), dass die Kapazität der i-ten Mobilstation, unter der Annahme, dass die Mobilstationen nicht kooperieren, folgendermaßen gegeben ist

$$C_i = \log_2\left\{1 + \text{SINR}_i(U, p)\right\}, \qquad 1 \leq i \leq K \qquad (4)$$

wobei

$$\text{SINR}_i(p, U) = \frac{P_i \mathbf{u}_i^H \mathbf{R}_i \mathbf{u}_i}{\sum_{\substack{k-1 \\ k \neq i}}^{K} P_k \mathbf{u}_k^H \mathbf{R}_i \mathbf{u}_k + \sigma_i^2}, \quad \forall i \qquad (5)$$

ist.

Für die Einhaltung strenger Anforderungen an die maximale Verzögerungszeit der Übertragungen, d.h. jedem Nutzer muss ein bestimmtes SINR garantiert werden, um die Übertragung einer bestimmten Datenrate zu jedem Zeitpunkt zu ermöglichen, muss es das Ziel sein, die Kapazität bei gleichzeitiger Beachtung der individuellen Kapazitätsforderungen $C_i = \log_2 1 + \gamma_i$ aufzuteilen. Aus den Gleichungen (4) und (5) ist ersichtlich, dass damit die Erfüllung der Mindestanforderung des Signal-zu-Interferenz-plus-Rauschabstands (minimum protection ratio) $\gamma_i$, d.h. $\text{SINR}_i(U, p) \geq \gamma_i$ für $\forall$ i notwendig ist. Außerdem muss eine weitere wichtige Bedingung bezüglich der Gesamtleistung $\|\mathbf{p}\|_1$ erfüllt sein, nämlich $\|\mathbf{p}\|_1 \leq \rho_{max}$. Die nun konkret zu lösende Aufgabe besteht demnach in der Minimierung der Gesamtleistung bei gleichzeitiger Einhaltung der Nebenbedingungen $\text{SINR}_i(U, p) \geq \gamma_i$ für $\forall$ i

$$\underset{U,p}{max} \; \underset{1 \leq i \leq K}{min} \|\mathbf{p}\|_1 \quad sodass \quad \frac{\text{SINR}_i(U, p)}{\gamma_i} \geq 1, \qquad (6)$$

Die erfindungsgemäße Lösung schlägt nunmehr in zwei Schritten einen Weg vor, in dem gemeinsam ein Downlink-Beamforming und ein Ressourcenmanagement realisiert wird. In den zwei aufeinanderfolgenden Schritten wird zunächst für die Bedingung

$$C_{opt}^{DL}(\rho_{max}) = \max_{U,p} \min_{1 \le i \le K} \frac{SINR_i(\mathbf{U},\mathbf{p})}{\gamma_i}, \quad s.t. \quad \|\mathbf{p}\|_1 \le \rho_{max} \tag{7}$$

bei gegebenen SINR-Anforderungen und einer Leistungsschwelle $\rho_{max}$ ein Maximum ermittelt. Ist $C_{max}^{opt}(\rho_{max}) < 1,$ ist dieses Szenario nicht durchführbar, denn es existiert keine Lösung (**U**, **p**), welche die Anforderungen für das gegebene Szenario erfüllt, und die Anfangsbedingungen müssen durch ein erneutes Ressourcenmanagement geändert, d.h. gelockert, werden.

In der ersten Stufe des erfindungsgemäßen Verfahrens wird zunächst von einer definierten Leistungsschwelle $\rho_{max}$ ausgegangen.

Es konnte gezeigt werden, dass für eine gegebene Leistung $\rho$ sowie gegebenes **U**$^{(n)}$ immer ein definierter Leistungsvektor $p_\rho^{(n)}$ existiert, der eine ausbalancierte Lösung im Downlink für alle K Nutzer mit

$$C^{DL}(\mathbf{U}^{(n)},\rho) = \frac{SINR_i^{DL}(\mathbf{U}^{(n)},\mathbf{p}_\rho^{(n)})}{\gamma_i}, \quad 1 \le i \le K \tag{8}$$

angibt. Dieser Vektor ergibt sich als Lösung des folgenden Optimierungsproblems

$$C^{DL}(\mathbf{U}^{(n)},\rho) = \max_{\mathbf{p}} \min_{1 \le i \le K} \frac{SINR_i^{DL}(\mathbf{U}^{(n)},\mathbf{p})}{\gamma_i},$$

$$\text{subject to } \|\mathbf{p}\|_1 \le \rho \tag{9}$$

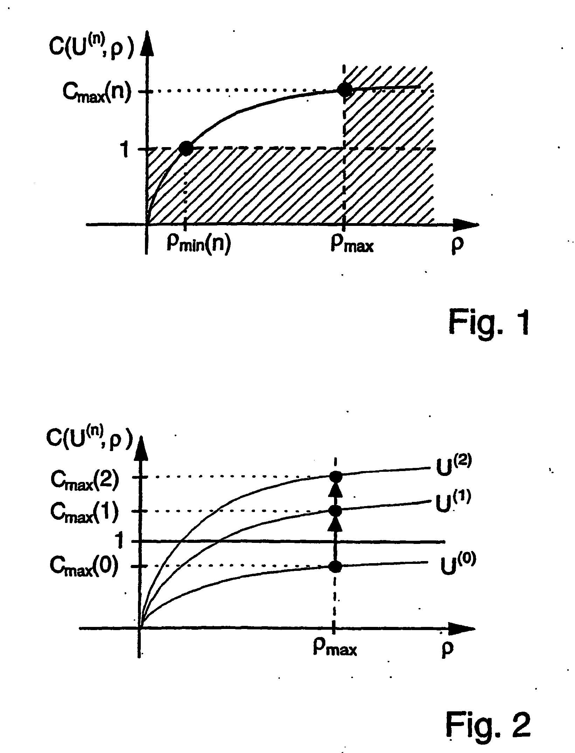

Ebenso wurde festgestellt, dass die Funktion $C^{DL}(\mathbf{U}^{(n)}, \rho)$ monoton wächst mit größer werdendem $\rho$. Dieses Verhalten ist in Fig. 1 dargestellt.

Es existiert eine Dualität zwischen Uplink und Downlink Beamforming, sodass $C^{DL}(\mathbf{U}^{(n)}\ \mathbf{p}) = C^{UL}(\mathbf{U}^{(n)}, \rho)$. Hieraus folgt $C_{opt}^{DL}(\rho_{max}) = C_{opt}^{UL}(\rho_{max}).$ Ebenso löst die optimale Downlink-Lösung **U**$^{opt}$ auch das Uplink-Problem. In den folgenden Ausführungen wird deshalb die Optimierung bzgl. des Uplink durchgeführt und das Ergebnis wird auf den Downlink übertragen.

Das Leistungsminimum für gegebenes **U**$^{(n)}$ kann durch Lösen des folgenden Optimierungsproblems ermittelt werden

$$\rho_{min}(n) = \min_{p} \|\mathbf{p}\|_1,$$

$$\text{s.t. } SINR_i(\boldsymbol{U}^{(n)}, \boldsymbol{p}) \ge \gamma_i, \quad \forall\ i \tag{10}$$

Unter Berücksichtigung des Faktes, dass $SINR_i^{UL}(\boldsymbol{U}^{(n)}, \boldsymbol{p})$ monoton steigend mit größer werdendem $P_i$ ist, kann einfach gezeigt werden, dass die Nebenbedingungen in (10) immer mit Gleichheit erfüllt sind. Folglich wird das Optimum durch einen einzigen Punkt charakterisiert, nämlich $C^{UL}(\boldsymbol{U}^{(n)}, \rho_{min}(n)) = 1$.

Der maximale SINR-Grenzwert wird für $\rho = \rho_{max}$ erreicht. Dieses Niveau wird erreicht durch den Leistungsvektor $p_{max}^{(n)}$, der erhalten wird durch die Lösung der Gleichung (9). Für die Aktualisierung der Leistungen in jedem Iterationsschritt wird beispielsweise die in Proc. Intern. Conf. On Acoustics, Speech, and Sig. Proc. (ICASSP), May 1998 in dem Artikel von W. Yang und G. Xu über "Optimal downlink power assignment for smart antenna systems" angegebene Lösung für die Optimierung von $\boldsymbol{p}$ für gegebene $\boldsymbol{U}^{(n)}$ angewendet. Die Lösung $\mathbf{p}_{\max}^{(n)}$ hat die Eigenschaft

$$\frac{1}{\lambda_{\max}(n)} := C^{UL}\left(\mathbf{U}^{(n)}, \rho_{\max}\right) = \frac{\mathrm{SINR}^{UL}{}_i\left(\mathbf{U}^{(n)}, \mathbf{p}_{\max}^{(n)}\right)}{\gamma_i}, \quad 1 \le i \le K \qquad (11)$$

Gleichzeitig soll $\left\|\mathbf{p}_{\max}^{(n)}\right\|_1 = \rho_{\max}$ gelten. Das Gleichungssystem (11) mit der Matrix $\Lambda(\mathbf{U}, \rho)$ wird hierbei folgendermaßen umgeschrieben

$$\Lambda\left(\mathbf{U}^{(n)}, \rho_{\max}\right) \begin{bmatrix} \mathbf{p} & {}^{(n)} \\ & 1 \end{bmatrix} = \lambda_{\max}(n) \begin{bmatrix} \mathbf{p} & {}^{(n)} \\ & 1 \end{bmatrix} \qquad (12)$$

wobei

$$\Lambda(\mathbf{U}, \rho) = \begin{bmatrix} \mathbf{D}\boldsymbol{\Psi}^T(\mathbf{U}) & \mathbf{D1} \\ \dfrac{1}{\rho}\mathbf{1}^T\mathbf{D}\boldsymbol{\Psi}^T(\mathbf{U}) & \dfrac{1}{\rho}\mathbf{1}^T\mathbf{D1} \end{bmatrix}$$

mit

$$\boldsymbol{\Psi}(\mathbf{U}) = \begin{bmatrix} 0 & \mathbf{u}_2{}^H\mathbf{R}_1\mathbf{u}_2/\sigma_1 & \cdots & \mathbf{u}_K{}^H\mathbf{R}_1\mathbf{u}_K/\sigma_1 \\ \mathbf{u}_1{}^H\mathbf{R}_2\mathbf{u}_1/\sigma_2 & 0 & & \\ \vdots & & \ddots & \vdots \\ \mathbf{u}_1{}^H\mathbf{R}_K\mathbf{u}_1/\sigma_K & & \cdots & 0 \end{bmatrix}$$

und

$$\mathbf{D} = \begin{bmatrix} \dfrac{\sigma_1^2\gamma_1}{\mathbf{u}_1{}^H\mathbf{R}_1\mathbf{u}_1} & & \mathbf{0} \\ & \ddots & \\ \mathbf{0} & & \dfrac{\sigma_K^2\gamma_k}{\mathbf{u}_K{}^H\mathbf{R}_K\mathbf{u}_K} \end{bmatrix}$$

ist.

Aufgrund des Perron-Frobenius-Theorems ist $C^{UL}$ der reziproke maximale Eigenwert von $\Lambda(\boldsymbol{U}^{(n)}, \rho_{max})$ und $\mathbf{p}_{\max}^{(n)}$ ergibt die ersten K Komponenten des verbundenen Eigenvektors.

Die Abhängigkeit der beiden Parameter $\rho$ und $C(\boldsymbol{U}^{(n)}, \rho)$ für gegebene $\boldsymbol{U}^{(n)}$ wurde schon beschrieben, nun ist also eine Lösung anzugeben, die die mit den Gleichungen (6) und (7) beschriebenen Probleme löst.

Hierzu wird zunächst eine Initialisierung $\mathbf{q}^{(0)} = [0,...,0]^T$ vorgenommen.

Als nächstes wird die Lösung $U^{(n+1)} = \left[ u_1^{(n+1)},...,u_K^{(n+1)} \right]$ bestimmt, welche die Größen $SINR^{UL}_i(U,p^{(n)})$,

$1 \leq i \leq K$ für den Uplink für gegebenes $\mathbf{q}^{(n)} = \begin{bmatrix} \mathbf{p}^{(n)} \\ 1 \end{bmatrix}$ maximiert. Dies führt auf K entkoppelte Probleme

$$u_i^{(n+1)} = \arg \max_{\mathbf{u}_i} \frac{\mathbf{u}^H \mathbf{R}_i \mathbf{u}_i}{\mathbf{u}^H \left( \sum_{\substack{k=1 \\ k \neq i}}^{K} \left[ \mathbf{q}^{(n)} \right]_k \mathbf{R}_k \right)_i \mathbf{u}} \quad 1 \leq i \leq K \tag{13}$$

welche durch die dominanten verallgemeinerten Eigenvektoren der Matrixpaare ($\mathbf{R}_i$, $\mathbf{Q}_i(\mathbf{q}^{(n)})$), $1 \leq i \leq$ K., gelöst werden, wobei

$$\mathbf{Q}_i\left(\mathbf{q}^{(n)}\right) = \sum_{\substack{k=1 \\ k \neq i}}^{K} \left[ \mathbf{q}^{(n)} \right]_k \mathbf{R}_k, \, 1 \leq i \leq K$$

ist.

Die Lösung $\mathbf{U}^{(n+1)}$ hat die Eigenschaft

$$SINR^{UL}_i\left(\mathbf{U},\mathbf{p}^{(n)}\right) \leq SINR^{UL}_i\left(\mathbf{U}^{(n+1)},\mathbf{p}^{(n)}\right), \quad 1 \leq i \leq K$$

d.h. $\mathbf{U}^{(n+1)}$ ist optimal unter allen möglichen Matrizen $\mathbf{U}$.

Als nächster Schritt wird nun der Grenzwert des ausbalancierten Verhältnisses $SINR_i/\gamma_i$ maximiert. Ausgehend von der Lösung für $U^{(n+1)}$ wird der optimale Leistungsvektor $\mathbf{p}^{(n+1)}$ durch Lösen der Gleichung (12) bestimmt. Dadurch erhält man einen einzigen Punkt $(\rho_{max}, C^{UL}(\mathbf{U}^{(n+1)},\mathbf{p}^{(n+1)}))$, wobei

$$C^{UL}\left(\mathbf{U}^{(n+1)},\rho\right) = \max_{\mathbf{p}} \min_{1 \leq i \leq K} \frac{SINR_i^{UL}\left(\mathbf{U}^{(n)},\mathbf{p}\right)}{\gamma_i},$$

$$\text{subject to } \|\mathbf{p}\|_1 \leq \rho \tag{14}$$

ist und der charakterisiert ist durch

$$\Lambda\left(\mathbf{U}^{(n+1)},\rho_{max}\right) \begin{bmatrix} p^{(n+1)} \\ 1 \end{bmatrix} = \lambda_{max}(n+1) \begin{bmatrix} p^{(n+1)} \\ 1 \end{bmatrix},$$

wobei

$$\frac{1}{\lambda_{\max}(n)} := C^{UL}\left(\mathbf{U}^{(n)}, \rho_{\max}\right) = \frac{\text{SINR}^{UL}{}_i\left(\mathbf{U}^{(n)}, \mathbf{p}^{(n)}_{\max}\right)}{\gamma_i}, \quad 1 \le i \le K$$

Die Monotonie der Optimierungssequenz kann gezeigt werden durch

$$\lambda_{\max}(n+1) = \max_{\mathbf{x}} \min_{y} \frac{\mathbf{x}^T \Lambda(\mathbf{U}^{(n+1)}, \rho) \mathbf{y}}{\mathbf{x}^T \mathbf{y}}$$

$$\le \max_{\mathbf{x}} \frac{\mathbf{x}^T \Lambda(\mathbf{U}^{(n+1)}, \rho) \mathbf{q}^{(n)}}{\mathbf{x}^T \mathbf{q}^{(n)}}$$

$$\le \frac{\mathbf{x}^T \Lambda(\mathbf{U}^{(n)}, \rho) \mathbf{q}^{(n)}}{\mathbf{x}^T \mathbf{q}^{(n)}} = \lambda_{\max}(n)$$

Weiterhin lässt sich zeigen, dass $\lim\limits_{n \to \infty} C^{UL}\left(\mathbf{U}^{(n)}, \rho_{\max}\right) = C^{UL}_{op}\left(\rho_{\max}\right)$

In Figur 2 ist das Konvergenzverhalten der Sequenz $C^{UL}(n)$ für einzelne Iterationsschritte n dargestellt. Die Iterationssequenz steigt monoton und nähert sich dem Optimum $C^{opt}_{max}$.

Für $C^{opt}_{max} \ge 1$ kann der Iterationsprozess in der ersten Stufe des erfindungsgemäßen Verfahrens abgebrochen werden, es wird nun mit der zweiten Stufe fortgesetzt, die die Minimierung der Gesamtsendeleistung zum Ziel hat.

Aus der bereits erwähnten Fig. 1 ist ersichtlich, dass das optimale Leistungsminimum $\rho^{opt}_{min}$ einer Beamforming-Matrix $U^{min}$ entspricht, die genügt der Gleichung/Bedingung $C^{UL}(U^{min}, \rho^{opt}_{min}) = 1$, wobei die Funktion C gemäß der Gleichung (14) definiert ist. In Fig. 2 ist das damit die Kurve, die die Schwelle 1 soweit wie möglich links schneidet.

Aus den Ausführungen zur ersten Stufe des erfindungsgemäßen Verfahrens ist bekannt, dass eine definierte Lösung U$^{(n)}$ existiert, die die Bedingung $\text{SINR}_i(U^{(n)}, p^{(n)}_{max}) / \gamma_i \ge 1$ erfüllt. Wird nun mit dieser Lösung begonnen, kann der Leistungsvektor $p^{(n)}_{min}$ bestimmt werden, der die Sendeleistung minimiert, während die Bedingung eingehalten wird, dass SINR$_i/\gamma_i$ = 1. Dies führt zu einem Gesamtleistungsniveau $\rho_{min}(n)$.

Für ein gegebens $U^{(n)}$ wird die Sendeleistung $\|\mathbf{p}\|_i$ durch Lösung des Optimierungsproblems

$$\rho^{(n)}_{\min} = \min_{\mathbf{p}} \|\mathbf{p}\|_1 \quad s.t. \quad \text{SINR}_i\left(\mathbf{U}^{(n)}, \mathbf{p}\right) \ge \gamma_i, \quad \forall i \tag{15}$$

minimiert.

Im folgenden Schritt wird die neue Beamforming-Matrix $U^{(n+1)}$ mit $\rho_{min}(n+1) \le \rho_{min}(n)$ gesucht. Dies ist wiederum die in Gleichung (13) angegebene Lösung.

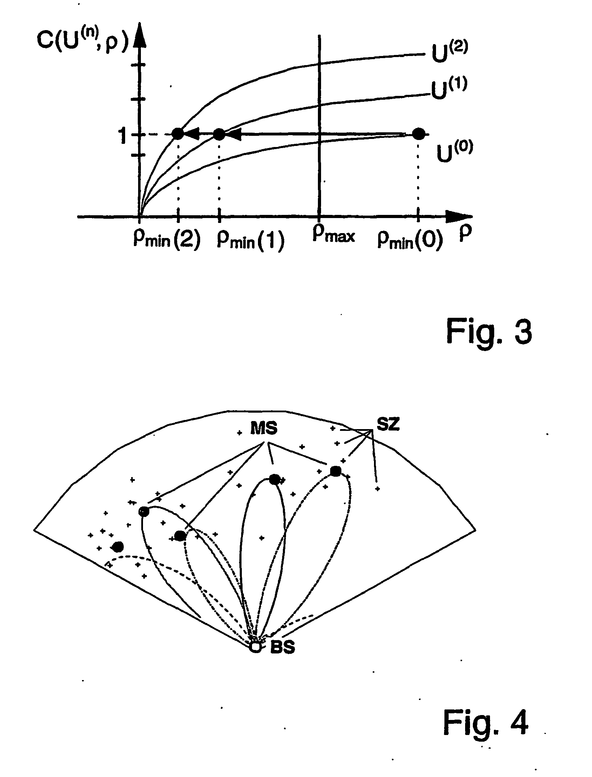

In Fig. 3 ist schematische der Iterationsprozess für die Ermittlung der Beamforming-Vektoren $U^{(n)}$ bei der entsprechenden Leistungsminimierung von $\rho_{min}(n)$ dargestellt.

Mit Hilfe des erfindungsgemäßen Verfahrens ist es damit gelungen, bei Einhaltung der Bedingung SINR$_i$ / $\gamma_i \ge$ 1 mit 1 $\le$ i $\le$ K sowie $\|\mathbf{p}\|_1 \le \rho_{max}$ für jede Mobilstation und Minimierung der Gesamtendeleistung leistungsoptimierte Beamforming-Vektoren für die Strahlformung des an der Basisstation befindlichen Antennenarrays zu ermitteln.

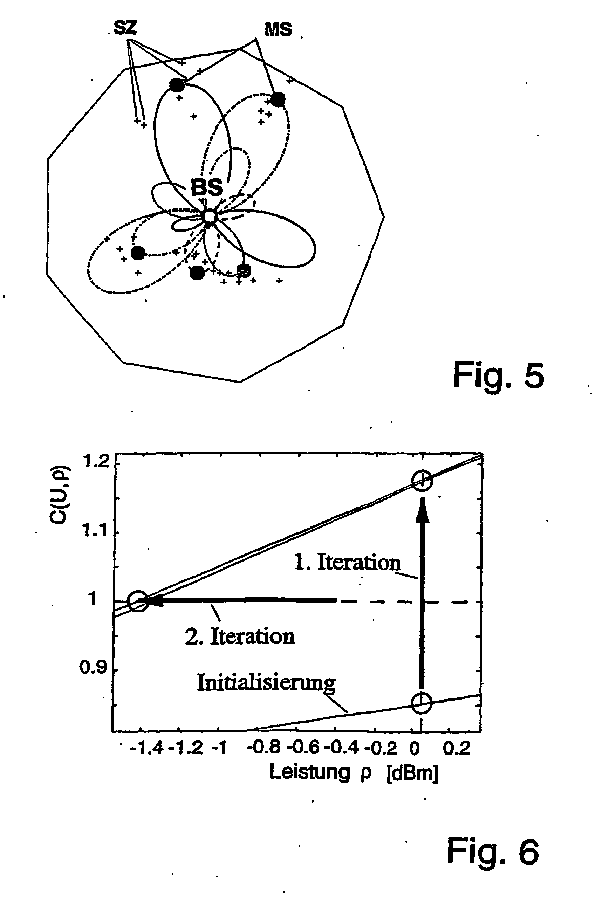

Die erfindungsgemäße Lösung wurde mittels Simulationsrechnungen überprüft. Betrachtet wurden hierbei zwei Typen von Antennenarrays mit je vier Elementen der Basisstation **BS** in einer Mobilfunkzelle mit fünf Mobilstationen **MS** und einigen lokalen Reflektoren **S** zum Einen ein lineares Antennenarry **LA,** dargestellt in Fig. 4, zum Anderen ein kreisförmiges Antennenarray **KA,** dargestellt in Fig. 5. Das lineare Antennenarray **LA** strahlt in eine Mobilfunkzelle mit einem Winkel von 120 °, das kreisförmige **KA** deckt den Vollkreis ab.

Die folgenden zwei Figuren verdeutlichen das Konvergenzverhalten der erfindungsgemäßen Lösung, d.h. die Abhängigkeit des Verhältnisses des Signal-zu-Interferenz-plus-Rauschabstandes (Signal-to-Interference-plus-Noise-Ratio - SINR) zur Mindestanforderung des Signal-zu-Interferenz-plus-Rauschabstands (minimum protection ratio), mit C(U, p) bezeichnet von der Sendeleistung p.

In Fig. 6 ist dieses für ein lineares Antennenarray dargestellt, bei dem die SINR-Bedingungen bereits bei der Initialisierung der Berechnung der Beamforming-Matrix/ der Beamforming-Vektoren erfüllt sind. In der zweiten Stufe des erfindungsgemäßen Verfahrens wird nun in einem iterativen Prozess (1. und 2. Iteration) die Sendeleistung minimiert. Danach ist nur noch eine geringe Verbesserung möglich, weil sich die ermittelte Sendeleistung bereits nur sehr wenig von der minimalen Gesamtleistung unterscheidet.

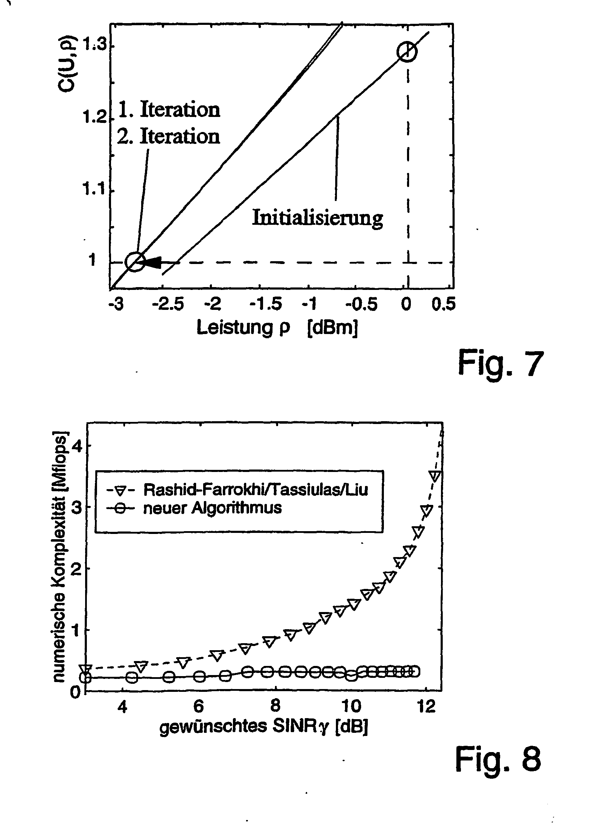

Fig. 7 zeigt das Konvergenzverhalten für ein lineares Antennenarray, wenn im Initialisierungsprozess nicht die Bedingung $SINR_i / \gamma_i \geq 1$ erfüllt ist. Dies wird erst in einem zweiten iterativen Schritt erreicht, die Konvergenz wird dann im dritten Iterationsschritt erreicht.

Ein ähnliches Konvergenzverhalten wie das eben beschriebene wurde auch für andere Szenarien mit unterschiedlichen Arraygeometrien und unterschiedlicher Nutzeranzahl beobachtet.

Mit Hilfe des erfindungsgemäßen Verfahrens wird die Konvergenz der ermittelten Beamforming-Gewichtsvektoren und der minimalen Sendeleistung bei Einhaltung vorgegebener Übertragungsbedingungen in drei bis vier Iterationsschritten erreicht. Das Konvergenzverhalten der erfindungsgemäßen Lösung ist im Vergleich zu der Lösung, die bereits in der Beschreibungseinleitung in Bezug auf die Veröffentlichung IEEE Journal on Selected Areas in Communications, Vol. 16, No. 8, October 1998, pp. 1437-1449 erwähnt wurde und die eine Kombination von Uplink-Strahlformung und "virtueller" Uplink-Leistungskontrolle verwendet, in Fig. 8 dargestellt. Die Darstellung der Komplexität des Rechenaufwandes in Abhängigkeit des Signal-zu-Interferenz-plus-Rauschabstandes (Signal-to-Interference-plus-Noise-Ratio - SINR) zeigt, dass die Werte, erhalten aus der im erwähnten Stand der Technik beschriebenen Lösung, mit größer werdenden SINR-Bedingungen degradieren, d.h. es wurde Divergenz beobachtet und somit keine gültige Abbruchbedingung erreicht.

## Patentansprüche

1. Verfahren zur leistungsoptimierten Strahlformung eines einer Basisstation (BS) eines zellularen Mobilfunksystems zugeordneten Antennenarrays, wobei die Basisstation (BS) in einer Abwärtsverbindung gleichzeitig in einem Frequenzband/Zeitschlitz mit einer Anzahl unabhängiger Mobilstationen (MS) von Nutzern kommuniziert, bei dem in einer ersten Stufe zur Optimierung einer SINR-Balance eine Untermenge der Anzahl Mobilstationen (MS) ermittelt wird, für die bei einer gegebenen maximalen Gesamtsendeleistung ($p_{max}$) der Basisstation (BS) ein eine jeweilige Verbindungsgüte bezeichnender Parameter der Untermenge Mobilstationen (MS) eine jeweilige Mindestverbindungsgüte ($\gamma$) erfüllt und ein Maximum bezüglich der Quotienten aus dem Parameter und der Mindestverbindungsgüte ($\gamma$) der jeweiligen Mobilstation (MS) für die Untermenge der Mobilstationen (MS) ermittelt wird, wobei verbindungsindividuelle Strahlformungs-Matrizen (U) ermittelt werden, wobei der Parameter ein SINR ist, wobei in einer zweiten Stufe die Gesamtsendeleistung ($p_{min}$) mittels einer Bestimmung einer jeweiligen minimalen Sendeleistung zu in der ersten Stufe ermittelten verbindungsindividuellen Strahlformungs-Matrizen (U) und, ausgehend von den minimierten Sendeleistungen, einer Optimierung der verbindungsindividuellen Strahlformungs-Matrizen (U) minimiert wird.

2. Verfahren nach Anspruch 1, bei dem
in der ersten Stufe die Untermenge Mobilstationen (MS) derart gewählt wird, dass ein ausbalanciertes Maximum des Quotienten aus Parametern und Mindestverbindungsgüten ($\gamma$) unter allen möglichen Kombinationen von Mobilstationen (MS) möglichst groß ist.

3. Verfahren nach Anspruch 2, bei dem
in der ersten Stufe eine Kanalschätzung für alle möglichen Mobilstationen (MS) durchgeführt und jeder Mobilstation (MS) bestimmte Kanaleigenschaften mittels einer räumlichen Kovarianzmatrix zugeordnet werden.

4. Verfahren nach Anspruch 3, bei dem
in der ersten Stufe für die Gesamtsendeleistung ($p_{max}$) der Basisstation (BS) einer Anzahl Mobilstationen (MS) jeweils eine definierte Mindestverbindungsgüte ($\gamma$) zugeordnet wird.

5. Verfahren nach Anspruch 4, bei dem

in der ersten Stufe eine verbindungsindividuelle Strahlformungs-Matrix (U) berechnet und für die berechnete Strahlformungs-Matrix (U) ein Leistungsvektor ermittelt wird, sodass die Gesamtleistung ($p_{max}$) der Basisstation (BS) und die Quotienten aus den Parametern und den Mindestverbindungsgüten (γ) ausbalanciert sind.

6. Verfahren nach Anspruch 5, bei dem
in der ersten Stufe eine optimierte Strahlformungs-Matrix (U) für ein optimiertes maximales Niveau der Kapazität (C) ermittelt wird, wobei das optimierte maximale Niveau der Kapazität größer gleich dem maximalen Niveau der Kapazität (C) ist.

7. Verfahren nach Anspruch 6, bei dem
in der ersten Stufe die Schritte der Ansprüche 2 bis 6 so oft wiederholt werden, bis eine Konvergenz der Differenz zwischen einem optimierten maximalen Niveau der Kapazität (C) und einem maximalen Niveau der Kapazität (C) eines vorherigen Iterationsschrittes kleiner einem vorgegebenen Wert festgestellt wird, oder die Bedingung, dass die optimale maximale Kapazität (C) größer gleich 1 ist, erfüllt ist, und bei einer optimalen maximalen Kapazität (C) kleiner 1 eine neue Kombination von Mobilstationen (MS) auf Basis des durchgeführten Ressourcenmanagements ausgewählt und die Schritte der Ansprüche 5 und 6 wiederholt werden, bis eine Konvergenz erreicht wird.

8. Verfahren nach Anspruch 7, bei dem
in der zweiten Stufe für die nach Anspruch 5 berechnete verbindungsindividuelle Strahlformungs-Matrix (U) ein leistungsminimierender Vektor ($p_{min}(n)$) und eine minimale Gesamtsendeleistung ($p_{min}$) bestimmt werden.

9. Verfahren nach Anspruch 8, bei dem
in der zweiten Stufe für die bestimmte minimale Gesamtsendeleistung (pmin) eine optimierte Strahlformungs-Matrix (U) ermittelt wird.

10. Verfahren nach Anspruch 9, bei dem
in der zweiten Stufe die Schritte der Ansprüche 8 und 9 so oft wiederholt werden, bis eine Differenz zwischen einer minimalen Gesamtsendeleistung eines vorherigen Iterationsschrittes und einer optimierten minimalen Gesamtsendeleistung kleiner einem vorgegebenen Wert ist.

11. Verfahren nach Anspruch 1, bei dem
als der die Verbindungsgüte bezeichnender Parameter ein Signal-zu-Interferenz-plus-Rauschabstand verwendet wird.

**Claims**

1. Method for power-optimized beamforming of an antenna array which is associated with a base station (BS) in a cellular mobile radio system, with the base station (BS) communicating simultaneously in a downlink connection in one frequency band/time slot with a number of independent mobile stations (MS) of users, in which, in a first stage, a subset of the number of mobile stations (MS) is determined in order to optimize an SINR balance, for which subset a parameter which indicates the respective connection quality for the subset of mobile stations (MS) satisfies a respective minimum connection quality (ϒ) for a given maximum total transmission power ($P_{max}$) of the base station (BS) and a maximum is determined with respect to the quotient of the parameter and the minimum connection quality (ϒ) of the respective mobile station (MS) for that subset of mobile stations (MS), with connection-specific beamforming matrices (U) being determined, with the parameter being an SINR with, in a second stage, the total transmission power ($P_{min}$) being minimized by determining a respective minimum transmission power for connection-specific beamforming matrices (U) determined in the first stage, and an optimization of the connection-specific beamforming matrices (U) being minimized on the basis of the minimized transmission powers.

2. Method according to Claim 1, in which,
in the first stage, the subset of mobile stations (MS) is selected such that a balanced maximum of the quotient of parameters and minimum connection qualities (ϒ) is as high as possible for all possible combinations of mobile stations (MS).

3. Method according to Claim 2, in which,
in the first stage, a channel estimate is carried out for all possible mobile stations (MS), and each mobile station (MS) is allocated specific channel characteristics by means of a three-dimensional covariance matrix.

**4.** Method according to Claim 3, in which,
in the first stage, the base station (BS) for a number of mobile stations (MS) is in each case allocated a defined minimum connection quality ($\Upsilon$) for the total transmission power ($p_{max}$).

**5.** Method according to Claim 4, in which,
in the first stage, a connection-specific beamforming matrix (U) is calculated, and a power vector is determined for the calculated beamforming matrix (U) such that the total power ($p_{max}$) of the base station (BS) and the quotient of the parameters and the minimum connection qualities ($\Upsilon$) are balanced.

**6.** Method according to Claim 5, in which,
in the first stage, an optimized beamforming matrix (U) is determined for an optimum maximum level of the capacity (C) with the optimized maximum level of the capacity being greater than or equal to the maximum level of the capacity (C).

**7.** Method according to Claim 6, in which,
in the first stage, the steps of Claims 2 to 6 are repeated until convergence of the difference between an optimized maximum level of the capacity (C) and a maximum level of the capacity (C) of a previous iteration step is found to be less than a predetermined value, or the condition that the optimum maximum capacity (C) is greater than or equal to unity is satisfied, and, if the optimum maximum capacity (C) is less than unity a new combination of mobile stations (MS) is selected on the basis of the resource management process carried out, and the steps in Claims 5 and 6 are repeated until convergence is achieved.

**8.** Method according to Claim 7, in which,
in the second stage, a power-minimizing vector ($p_{min}(n)$) and a minimum total transmission power ($p_{min}$) are determined for the connection-specific beamforming matrix (U) calculated according to Claim 5.

**9.** Method according to Claim 8, in which,
in the second stage, an optimized beamforming matrix (U) is determined for the specific minimum total transmission power ($p_{min}$).

**10.** Method according to Claim 9, in which,
in the second stage, the steps of Claims 8 and 9 are repeated until the difference between the minimum total transmission power of a previous iteration step and the optimized minimum total transmission power is less than a predetermined value.

**11.** Method according to Claim 1, in which,
a signal-to-interference-plus-noise ratio is used as the parameter which denotes the connection quality.

**Revendications**

**1.** Procédé de formation de faisceaux à puissance optimisée d'un réseau d'antennes associé à une station de base (BS) d'un système radio mobile cellulaire, la station de base (BS) communiquant simultanément dans une bande de fréquences / un créneau temporel avec un nombre de stations mobiles (MS) d'usagers indépendantes dans une liaison descendante, dans lequel, à un premier niveau, aux fins de l'optimisation d'un équilibre SINR, un sous-ensemble du nombre de stations mobiles (MS) est déterminé pour lequel, étant donné une puissance d'émission totale maximale donnée ($p_{max}$) de la station de base (BS), un paramètre du sous-ensemble de stations mobiles (MS) désignant une qualité de liaison respective satisfait une qualité de liaison minimale ($\gamma$) respective et un maximum relatif aux quotients du paramètre et de la qualité de liaison minimale ($\gamma$) de la station mobile respective (MS) est déterminé pour le sous-ensemble des stations mobiles (MS) des matrices de formation de faisceaux (U) individuelles aux liaisons étant déterminées, le paramètre étant un SINR, à un deuxième niveau, la puissance d'émission totale ($p_{min}$) étant minimisée au moyen d'une détermination d'une puissance d'émission minimale respective pour des matrices de formation de faisceaux (U) individuelles aux liaisons déterminées au premier niveau et, partant des puissances d'émission minimisées, d'une optimisation des matrices de formation de faisceaux (U) individuelles aux liaisons.

**2.** Procédé selon la revendication 1 dans lequel, au premier niveau, le sous-ensemble de stations mobiles (MS) est choisi de manière telle qu'un maximum équilibré du quotient de paramètres et de qualités de liaisons minimales ($\gamma$)

parmi toutes les combinaisons possibles de stations mobiles (MS) est aussi grand que possible.

3. Procédé selon la revendication 2, dans lequel, au premier niveau, une estimation de canaux est effectuée pour toutes les stations mobiles (MS) possibles et des caractéristiques de canaux déterminées sont affectées à chaque station mobile (MS) au moyen d'une matrice de covariance spatiale.

4. Procédé selon la revendication 3, dans lequel, au premier niveau, respectivement une qualité de liaison minimale définie ($\gamma$) est affectée à un nombre de stations mobiles (MS) pour la puissance d'émission totale ($p_{max}$) de la station de base (BS).

5. Procédé selon la revendication 4, dans lequel, au premier niveau, une matrice de formation de faisceaux (U) individuelle à une liaison est calculée et, pour la matrice de formation de faisceaux (U) calculée, un vecteur de puissance est déterminé de sorte que la puissance totale ($p_{max}$) de la station de base (BS) et les quotients des paramètres et des qualités de liaisons minimales ($\gamma$) sont équilibrés.

6. Procédé selon la revendication 5, dans lequel, au premier niveau, une matrice de formation de faisceaux (U) optimisée est déterminée pour un niveau maximal optimisé de la capacité (C), le niveau maximal optimisé de la capacité étant supérieur ou égal au niveau maximal de la capacité (C).

7. Procédé selon la revendication 6, dans lequel, au premier niveau, les étapes des revendications 2 à 6 sont répétées jusqu'à constatation d'une convergence de la différence entre un niveau maximal optimisé de la capacité (C) et un niveau maximal de la capacité (C) d'une étape d'itération précédente inférieur à une valeur prédéterminée ou jusqu'à ce que la condition que la capacité maximale optimale (C ) soit supérieure ou égale à 1 soit remplie et, étant donné une capacité maximale optimale (C) inférieure à 1, une nouvelle combinaison de stations mobiles (MS) est sélectionnée sur la base de la gestion de ressources effectuée et les étapes des revendications 5 et 6 sont répétées jusqu'à obtention d'une convergence.

8. Procédé selon la revendication 7, dans lequel, au deuxième niveau, un vecteur ($p_{min}(n)$) minimiseur de puissance et une puissance d'émission totale minimale ($p_{min}$) sont déterminés pour la matrice de formation de faisceaux (U) individuelle à une liaison qui a été calculée selon la revendication 5.

9. Procédé selon la revendication 8, dans lequel, au deuxième niveau, une matrice de formation de faisceaux (U) optimisée est déterminée pour la puissance d'émission totale minimale déterminée (pmin).

10. Procédé selon la revendication 9, dans lequel, au deuxième niveau, les étapes des revendications 8 et 9 sont répétées jusqu'à ce qu'une différence entre une puissance d'émission totale minimale d'une étape d'itération précédente et une puissance d'émission totale minimale optimisée soit inférieure à une valeur prédéterminée.

11. Procédé selon la revendication 1, dans lequel est utilisé, en tant que le paramètre désignant la qualité de liaison, un rapport signal à interférence plus bruit.

Fig. 1

Fig. 2

Fig. 3

Fig. 4

# Fig. 5

# Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0899813 A

**In der Beschreibung aufgeführte Nicht-Patentliteratur**

- *Proc. IEEE,* 1997, vol. 85 (7), 1029-1060
- *Proc. IEEE,* 1997, vol. 85 (8), 1193-1245
- Proc. ITG-Diskussionssitzung. *Antennen für mobile Systeme 2001,* Marz 2001, 113-122
- *IEEE Journal on Selected Areas in Communications,* Oktober 1998, vol. 16 (8), 1437-1449
- *Proc. of 37th Annual Allerton Conference,* September 1999, 987-996
- Spatial covariance based downlink beamforming in an SDMA mobile radio system. **FARSAKH, C. et al.** IEEE Transactions on Communications. IEEE Inc, November 1998, vol. 46, 1497-1506
- *IEEE Trans. on Information Theory,* September 1996, vol. 42 (5), 1520-1529
- **W. YANG ; G. XU.** Proc. Intern. Conf. On Acoustics, Speech, and Sig. Proc. (ICASSP. *Optimal downlink power assignment for smart antenna systems,* Mai 1998